# EUROPÄISCHE PATENTSCHRIFT

(11) **EP 2 765 364 B1**
(45) Veröffentlichungstag und Bekanntmachung des Hinweises auf die Patenterteilung: **12.10.2016**
(21) Anmeldenummer: 13195471.1
(22) Anmeldetag: 03.12.2013
(51) Int. Cl.: F24H 9/12

(54) **Schichtenspeicher**
Stratified storage
Mémoire en couches

(30) Priorität: 07.12.2012 DE 102012024073
(43) Veröffentlichungstag der Anmeldung: 13.08.2014
(73) Patentinhaber: Vaillant GmbH, 42859 Remscheid (DE)
(72) Erfinder: Dorenburg, Michael, 40699 Erkrath (DE); Luka, Jürgen, 58453 Witten (DE)
(74) Vertreter: Popp, Carsten

(56) Entgegenhaltungen:
- EP-A1- 1 637 816
- DE-B3- 10 237 771
- DE-U1- 9 212 049
- DE-U1-202010 004 802
- JP-A- S5 986 847

## Beschreibung

Die Erfindung betrifft einen als Schichtenspeicher ausgeführten Pufferspeicher zum Speichern von heißem Wasser für Heizzwecke und zur Brauchwasserversorgung. Schichtenspeicher nutzen die Dichteunterschiede unterschiedlich warmen Wassers aus, so dass warmes Wasser im oberen Bereich und kaltes Wasser im unteren Bereich des Schichtenspeichers gespeichert wird und sind beispielsweise aus der Patentschrift US 4,598,694 bekannt. Der Vorteil des Schichtenspeichers besteht darin, dass sowohl beim Einspeisen wie auch bei der Entnahme von warmem Wasser dies in den der jeweiligen Temperatur entsprechenden Bereichen erfolgen kann. Die Beheizung des Schichtenspeichers durch eine oder mehrere externen Wärmequelle erfolgt dadurch, dass das unten eingelagerte kalte Wasser entnommen wird, extern aufgeheizt wird und abhängig von der Temperatur im mittleren und/oder oberen Bereich wieder eingelagert wird. Im Falle eines Brenners, der Wasser mit hoher Temperatur eingelagert, wird dies im oberen Bereich erfolgen. Bei einer Solaranlage, die auch zusätzlich zu einem Brenner installiert sein kann, wird dies im mittleren Bereich der Fall sein. Ziel ist es dabei, das Wasser in einem Bereich beziehungsweise einer Schicht einzulagern, deren Temperatur möglichst der Temperatur des einströmenden Wassers entspricht.

Dabei ist es wichtig, dass eine unerwünschte Durchmischung der Schichten verhindert wird. Dies erfolgt unter anderem dadurch, dass das Einspeisen und Entnehmen von Wasser so erfolgt, dass eine möglichst geringe Verwirbelung der Schichten stattfindet. Da die Temperatur des Schichtenspeichers Schwankungen unterliegt, muss in der Regel das in der Nähe der der Einlauftemperatur entsprechenden Schicht eingeleitete Wasser auf- oder Absteigen, um die Schicht mit gleicher Temperatur zu erreichen. Dies wird durch die temperaturabhängigen Dichteunterschiede sichergestellt.

Aus dem Stand der Technik sind verschiedene Ansätze zur möglichst störungsfreien Einlagerung von Wasser in einen konventionellen Speicher oder Schichtenspeicher bekannt. In der Patentanmeldung EP 0 928 940 A2 werden labyrinthförmige Leitbleche am Einlauf vorgeschlagen, die eine gleichmäßige Einströmung des Wassers in radialer Richtung erzwingen. Aufgrund der großen Austrittsfläche und der damit verbundenen niedrigen Ausströmgeschwindigkeit ist die Gefahr einer Verwirbelung oder Durchmischung gering. Einen ähnlichen Ansatz schlagen die Patentanmeldungen EP 1 489 374 A1 und DE 38 19 317 A1 und das Gebrauchsmuster DE 297 14 361 U1 vor. Anstelle der Leitbleche werden hier Lochbleche verwendet, um das gleiche Ziel zu erreichen. Die Gebrauchsmusterschrift DE 92 12 049 U1 offenbart einen Warmwasserspeicher mit einem Kaltwasser-Einlaufrohr. Um eine Durchwirbelung der Temperaturschichtung des im Warmwasserspeicher gespeicherten Wassers zu verringern, wird das einströmende Kaltwasser zunächst gegen den Behälterboden geleitet, wo das Wasser zunächst abgebremst wird. Danach wird das Wasser von einem scheibenförmigen oder Schüsselförmigen Abprallelement weiter abgebremst und radial am unteren Behälterboden entlang dem warmen Wasser beigemischt.

Die Patentanmeldung DE 10 2004 17 532 A1 schlägt vor, den Wasserzulauf in ein platten- oder schalenförmiges Leitmittel zu leiten. Damit soll eine radiale Umlenkung und damit einhergehend eine horizontale Wasserverteilung des Wassers erreicht werden, was bevorzugt durch eine Rückprallscheibe unterstützt wird.

Die aus dem Stand der Technik bekannten Schichtenspeicher weisen also Leitmittel auf, die das einströmende Wasser in radialer Richtung umlenken. In radialer Richtung ausströmende Wasser hat jedoch zur Wirkung, dass dieses die Behälterwand des Schichtenspeichers erreicht und dort in undefinierter Weise umgelenkt wird, was zu einer ungünstigen Durchmischung führt. Außerdem müssen die Leitmittel teilweise sehr aufwändig hergestellt werden, um eine gleichmäßige radiale Strömung zu erreichen.

Die japanische Patentanmeldung JPS 59 86847 A offenbart einen konventionellen Warmwasserspeicher mit einem Mittel zum verwirbelungsarmen Einlagern von Warmwasser, welches zwei gegensinnig ausgerichtete und ineinander angeordnete schalenförmige Mittel umfasst. Dadurch wird der Warmwasserstrom aufgeweitet.

Da bei einem Schichtenspeicher das in der Nähe der der Einlauftemperatur entsprechenden Schicht eingeleitete Wasser aufgrund temperaturabhängiger Dichteunterschiede auf- oder absteigt und so die Schicht mit gleicher Temperatur erreicht, werden bei Schichtenspeichern besonders hohe Anforderungen an eine verwirbelungsfreie Einlagerung gestellt.

Es ist daher Aufgabe der Erfindung, einen Schichtenspeicher mit kostengünstig herzustellenden Leitmitteln bereitzustellen, die zugleich eine störungsarme Einlagerung des zulaufenden Wassers sicherstellen.

Diese Aufgabe wird durch einen Schichtenspeicher gemäß den Merkmalen des unabhängigen Anspruchs gelöst. Dazu umfasst der Schichtenspeicher zumindest ein separates Mittel zum Einlagern von Wasser. Unter separat ist zu verstehen, dass dieses Mittel eigenständig ist und zum Beispiel nicht den Boden des Schichtenspeichers als Leitmittel umfasst. Dies ist deswegen wesentlich, da eine möglicherweise unkontrollierte Strömung entlang der Behälterwand vermieden werden soll. Das Mittel zum Einlagern von Wasser umfasst zwei unterschiedlich große schalenförmige Leitmittel, deren Öffnungen zueinander ausgerichtet sind.

Die Öffnung des Einlaufs mündet im kleineren zweiten schalenförmigen Leitmittel. Dadurch wird erreicht, dass das einlaufende Wasser mehrfach umgelenkt wird und über einen großen Querschnitt mit sehr niedriger Geschwindigkeit in den Schichtenspeicher einströmt. Erfindungsgemäß sind die schalenförmigen Leitmittel im Randbereich gelocht. Dadurch wird erreicht, dass die Strömung einerseits verwirbelungsfrei den Rand des Leitmittels passiert, andererseits das zulaufende Wasser abermals aufgeteilt wird und einen gezielten Bremsimpuls in einen schon umgelenkten Volumenstrom einbringt. Unter gelocht ist erfindungsgemäß jede Art von Löchern, Schlitzen, Perforationen etc. gemeint. Darüber hinaus oder stattdessen ist das zweite schalenförmigen Leitmittel im Bereich des Bodens oder am Bodenrand gelocht. Dadurch kann ein Teil des zulaufenden Wassers direkt dem Schichtenspeicher zufließen, wodurch eine über dem Querschnitt des ersten schalenförmigen Leitmittels besonders gleichmäßige Ausströmung erreicht wird, ohne dass es zu Abschattungseffekten durch das zweite schalenförmige Leitmittel kommt.In einer bevorzugten Ausführungsvariante ist das zweite schalenförmige Leitmittel teilweise oder vollständig innerhalb des ersten schalenförmigen Leitmittels angeordnet. Dies führt zu einer besonders vorteilhaftem und sicheren mehrfachen Umlenkung des einlaufenden Wassers.

Besonders bevorzugt sind die schalenförmigen Leitmittel quaderförmig ausgebildet. Dies erlaubt eine preisgünstige Herstellung.

Ebenfalls bevorzugt sind die Öffnungsflächen der Leitmittel innerhalb des Schichtenspeichers horizontal ausgerichtet.

Bevorzugt ist das Verhältnis der Öffnungsflächen zwischen dem kleinen zweiten schalenförmigen Leitmittel und dem großen ersten schalenförmigen Leitmittel kleiner 20 %, besonders bevorzugt kleiner 10 %.

Um dem zulaufende Wasser beim Umlenken im schalenförmigen Leitmittel eine zur Öffnungsfläche orthogonale Geschwindigkeitskomponente zu vermitteln ist das Verhältnis zwischen Höhe und Breite des schalenförmigen Leitmittels größer 20 %, bevorzugt größer 50 %.

Vorteilhafterweise sind die Öffnungsflächen der beiden schalenförmigen Leitmittel und der Rohrdurchmesser der Zuleitung so aufeinander abgestimmt, dass in Betrieb das zulaufende Wasser mit einer überwiegend axialen Geschwindigkeitskomponente in den Schichtenspeicher einströmt, die derart gering ist, dass die durch die Temperaturdifferenzen bedingten Dichtedifferenzen zwischen dem einlaufenden Wasser und dem umgebenden Wasser ausreichen, das das einströmende Wasser unmittelbar in die Ziel-Speicherschicht zu lenken. Erfindungsgemäß ist dies unter 0,5 m/s, bevorzugt unter 0,05 m/s. Dabei tritt das Wasser aufgrund der Ausrichtung der Leitmittel zunächst nach unten aus und strömt dann entweder weiter nach unten oder wird nach oben umgelenkt. Grundsätzlich können die Leitmittel erfindungsgemäß auch in entgegen gesetzter Richtung angeordnet sein.

In einer Variante des Schichtenspeichers ist ein Auslauf, aus dem warmes Wasser gezapft werden kann, so angeordnet, dass die Mündung des Auslaufs innerhalb des ersten schalenförmigen Leitmittels angeordnet ist. Dadurch kann im Betrieb insbesondere bei kontinuierlichem Zu- und Ablauf eine Reduzierung vom ersten schalenförmigen Leitmittel in den Schichtenspeicher ein- oder ausströmenden Volumenstroms erreicht werden.

In einer Weiterbildung der Erfindung sind auch weitere Zuläufe mit weiteren zweiten schalenförmigen Leitmitteln vorgesehen. Die zweiten schalenförmigen Leitmittel bewirken, dass sich die Zuläufe gegenseitig nur geringfügig beeinflussen.

Die Erfindung wird anhand der Figuren erläutert.

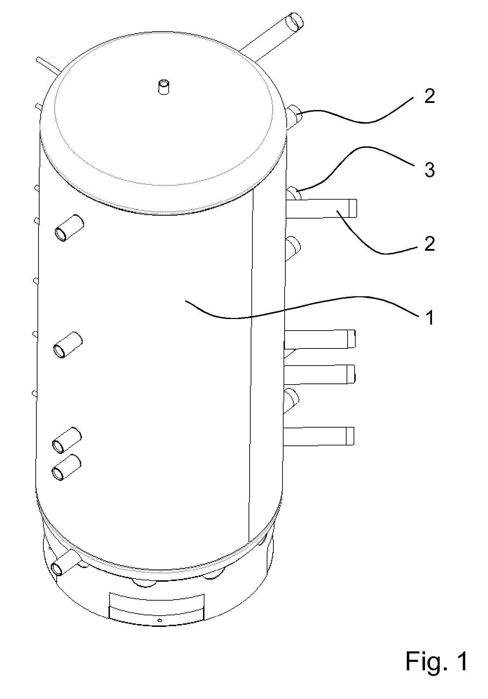

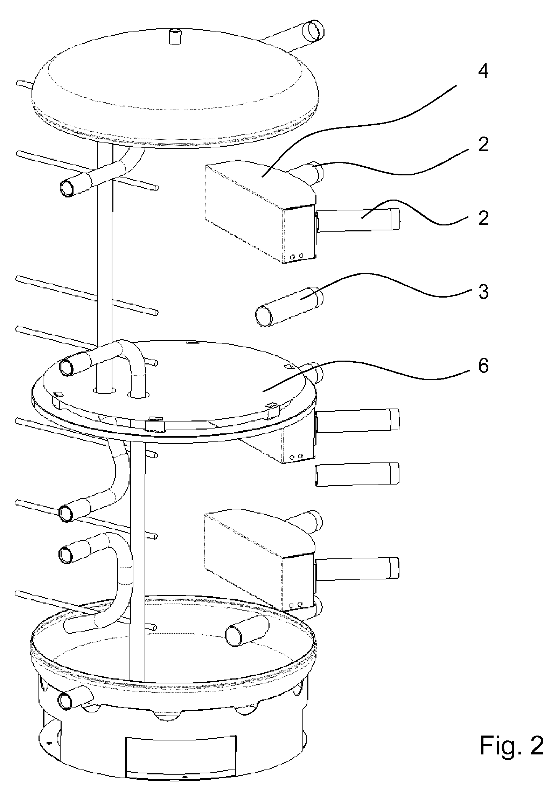

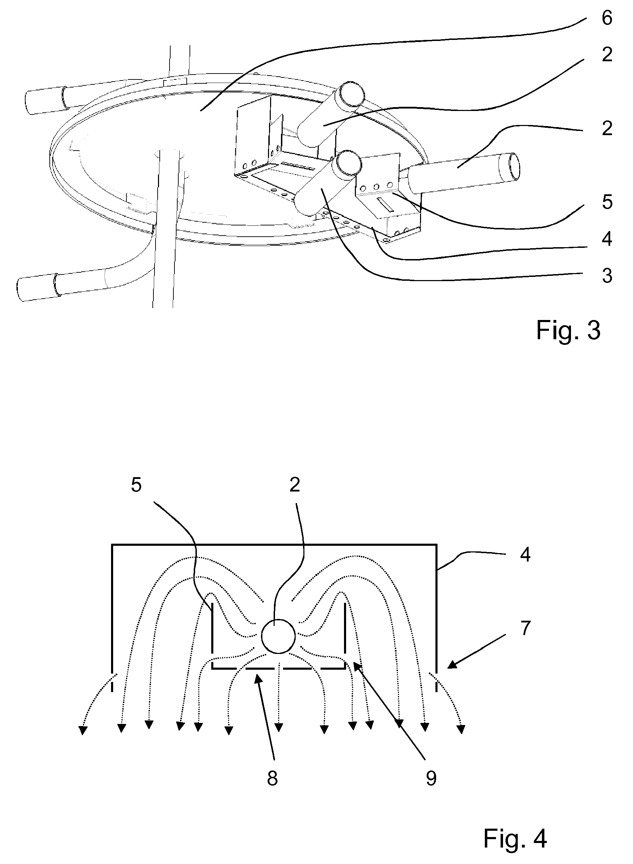

Abgebildet ist in Figur 1 ein als Schichtenspeicher ausgeführter Pufferspeicher als zentrale Energiespeichereinheit zum Speichern vom Warmwasser ohne Isolierung und angeschlossene Module zur Be- und Entladung. In Figur 2 ist der Schichtenspeicher aus Figur 1 ohne Behälterwand 1 dargestellt. Figur 3 zeigt in einer Detailansicht des Schichtenspeichers das erste und zweite schalenförmige Leitmittel 4, 5.
Figur 1 und 2 zeigen einen erfindungsgemäßen Schichtenspeicher. Eine Behälterwand 1 umschließt einen Hohlraum zum Speichern von warmem Wasser. Zur besseren Übersicht ist in Figur 2 der Schichtenspeicher ohne Behälterwand 1 dargestellt. Beladen werden kann ein solcher Schichtenspeicher über diverse Wärmeerzeuger, die Warmwasser auf verschiedenen Temperaturniveaus bereitstellen. Dies können konventionell, elektrische aber auch regenerative Wärmequellen sein. Dazu umfasst der Speicher an der Rückseite in unterschiedlicher Höhe Zuläufe 2, die in aus schalenförmigen Leitmitteln 4, 5 (in Figur 1 und 2 nicht sichtbar) gebildete Anströmdämpfer münden. Darüber hinaus sind im Bereich der schalenförmigen Leitmittel 4 Ausläufe 3 vorgesehen. Ein Zwischenboden 6 verhindert zusätzlich eine Durchmischung der Schichten im Schichtenspeicher.
Figur 3 zeigt in einer anderen Ansicht die schalenförmigen Leitmittel 4 und 5 im Detail. Das erste schalenförmige Leitmittel 4 wird durch einen nach unten geöffneten Quader gebildet. Dabei ist zu beachten, dass in der Figur 3 die Behälterwand 1 nicht dargestellt ist, die einen Bestandteil des Quaders bildet, d.h. die schalenförmigen Leitmittel 4 und 5 sind zur Behälterwand hin geschlossen. Innerhalb des ersten schalenförmigen Leitmittels 4 sind zwei zweite schalenförmige Leitmittel 5 vorgesehen. Über Zuläufe 2 strömt Warmwasser zunächst in die ersten schalenförmigen Leitmittel 5 ein. Die Anordnung zum Anschlussrohr erfolgt einzeln oder jeweils paarig in einem kleinen zweiten schalenförmigen Leitmittel, welche jeweils in einem großen ersten schalenförmigen Leitmittel eingebracht ist, wobei das zweite schalenförmige Leitmittel asymmetrisch oder symmetrisch zum ersten schalenförmigen Leitmittel platziert wird. So kann ein erstes schalenförmige Leitmittel die Funktion für zwei zweite schalenförmige Leitmittel bedienen.

Dadurch wird erreicht, dass das einlaufende Wasser zunächst mit einer relativ hohen Geschwindigkeit in das zweite schalenförmige Leitmittel einströmt. Dort wird es radial auf einen größeren Querschnitt verteilt und von den Rändern des zweiten schalenförmigen Leitmittels so umgelenkt, dass es mit nun einer niedrigeren Geschwindigkeit in das erste schalenförmige Leitmittel einströmt. Hier wird das Wasser wiederum radial auf einen größeren Querschnitt verteilt und von den Rändern des ersten schalenförmigen Leitmittels umgelenkt.

Dadurch wird eine über den Querschnitt gleichmäßige Strömung mit geringer Geschwindigkeit von unter 0,5 m/s, bevorzugt von unter 0,05 m/s erreicht. Im Idealfall ist dies eine Pfropfenströmung. Um die gleichmäßige Verteilung des zuströmenden Wassers zu erreichen, ist das zweite schalenförmige Leitmittel 5 im unteren Boden 8 und am unteren Rand 9 gelocht bzw. geschlitzt. Dadurch wird verhindert, dass unterhalb des zweiten schalenförmigen Leitmittels 5 eine Abschattung oder ein Todwassergebiet gebildet wird. Das erste schalenförmige Leitmittel weist ebenfalls am unteren Rand 7 Löcher auf, die eine Verwirbelung am Rand verhindern. Direkt unterhalb des ersten schalenförmigen Leitmittels 4 ist ein Auslauf 3 vorgesehen. Dieser mündet entweder direkt unterhalb oder innerhalb des ersten schalenförmigen Leitmittels. Damit ist sichergestellt, dass bereits ein Teil des über die Zuleitung 2 zulaufenden warmen Wassers direkt vom Auslauf 3 aufgenommen wird. Dadurch wird der GesamtVolumenstrom des dem Schichtenspeicher zuströmenden warmen Wassers reduziert, wodurch zugleich die Einströmgeschwindigkeit und dadurch die Durchmischung reduziert wird. In dem Ausführungsbeispiel sind zwei zweite schalenförmigen Leitmittel 5 in einem ersten schalenförmigen Leitmittel 4 dargestellt. Es ist erfindungsgemäß auch möglich weniger oder mehr Zuleitungen 2 und zweite schalenförmige Leitmittel 5 innerhalb eines ersten schalenförmigen Leitmittels 4 vorzusehen.

So ist abgesichert, dass mehrere Wärmeerzeuger gleichzeitig, ohne sich gegenseitig zu beeinflussen, den Speicher beladen können.

Figur 4 stellt qualitativ die Strömung des durch die Zuleitung 2 einströmenden warmen Wassers innerhalb der schalenförmigen Leitmittel dar. Wie zuvor beschriebenen würde das einströmende Wasser vom zweiten schalenförmigen Leitmittel umgelenkt und auf einen größeren Querschnitt verteilt, um dann anschließend vom ersten schalenförmigen Leitmittel wiederum umgelenkt zu werden und auf einen größeren Querschnitt verteilt zu werden. Durch Löcher und Schlitze im Boden 8 und unteren Rand 9 des zweiten schalenförmigen Leitmittels 5 strömt auch Warmwasser unterhalb des Bodens 8 des zweiten schalenförmigen Leitmittels aus. Löcher im unteren Rand 7 des ersten schalenförmigen Leitmittels verhindern eine Verwirbelung am unteren Rand 7. Das derart auf einen größeren Querschnitt und idealerweise in Form einer Pfropfenströmung in den Schichtenspeicher einströmende Wassers weist eine Geschwindigkeit kleiner 0,5, bevorzugt kleiner 0,05 m/s auf. Aufgrund der geringen Einströmgeschwindigkeit können bereits geringe Dichteunterschiede im Schichtenspeicher aufgrund der Temperaturunterschiede innerhalb des Schichtenspeichers das einströmende Warmwasser besonders leicht und störungsfrei lenken.

### Bezugszeichenliste

- 1: Behälterwand
- 2: Zuleitung
- 3: Auslauf
- 4: Erstes schalenförmiges Leitmittel
- 5: Zweites schalenförmiges Leitmittel
- 6: Zwischenboden
- 7: Unterer Rand des ersten schalenförmigen Leitmittels
- 8: Unterer Boden des zweiten schalenförmigen Leitmittels
- 9: Unterer Rand des zweiten schalenförmigen Leitmittels

## Patentansprüche

1. Schichtenspeicher, umfassend zumindest ein separates Mittel zum Einlagern von Wasser, wobei das Mittel zum Einlagern eine Zuleitung (2), ein erstes schalenförmiges Leitmittel (4) und ein zweites schalenförmiges Leitmittel (5) umfasst, welches kleiner als das erste schalenförmige Leitmittel (1) ist, wobei die schalenförmigen Leitmittel (4, 5) so zueinander angeordnet sind, dass die konkave Seite des zweiten schalenförmigen Leitmittels (5) in Richtung der konkaven Seite des ersten schalenförmigen Leitmittels (4) ausgerichtet ist, so dass im Betrieb das einströmende Wasser vom zweiten schalenförmigen Leitmittel (5) umgelenkt und auf einen größeren Querschnitt verteilt wird, um dann anschließend vom ersten schalenförmigen Leitmittel (4) wiederum umgelenkt zu werden und auf einen größeren Querschnitt verteilt zu werden, **dadurch gekennzeichnet, dass** die schalenförmigen Leitmittel (4, 5) und die Zuleitung (2) so zueinander angeordnet sind, dass die Öffnung der Zuleitung (2) im zweiten schalenförmigen Leitmittel (5) mündet und dass das erste schalenförmige Leitmittel (4) und/oder das zweite schalenförmige Leitmittel (5) im Randbereich (7, 9) gelocht sind und/oder das zweite schalenförmige Leitmittel (5) im Bereich des Bodens (8) und/oder am Bodenrand gelocht ist.

2. Schichtenspeicher nach Anspruch 1, **wobei** das zweite schalenförmige Leitmittel (5) teilweise innerhalb des ersten schalenförmigen Leitmittels (4) angeordnet ist.

3. Schichtenspeicher nach Anspruch 1, **wobei** das zweite schalenförmige Leitmittel (5) innerhalb des ersten schalenförmigen Leitmittels (4) angeordnet ist.

4. Schichtenspeicher nach einem der Ansprüche 1 bis 3, **wobei** das erste schalenförmige Leitmittel (4) und/oder das zweite schalenförmige Leitmittel (5) quaderförmig oder zumindest teilweise quaderförmig ausgebildet ist.

5. Schichtenspeicher nach einem der vorhergehenden Ansprüche, **wobei** die Öffnungsfläche des ersten schalenförmigen Leitmittels (4) und/oder des zweiten schalenförmigen Leitmittels (5) horizontal ausgerichtet ist.

6. Schichtenspeicher nach einem der vorhergehenden Ansprüche, **wobei** das Verhältnis der Öffnungsflächen des zweiten schalenförmigen Leitmittels (5) und des ersten schalenförmigen Leitmittels (4) kleiner 20 %, bevorzugt kleiner 10 % ist.

7. Schichtenspeicher nach einem der vorhergehenden Ansprüche, **wobei** das Verhältnis zwischen Höhe und Breite des ersten (4) und/oder des zweiten schalenförmige Leitmittels (5) größer 20 %, bevorzugt größer 50 % ist.

8. Schichtenspeicher nach einem der vorhergehenden Ansprüche, **wobei** die Öffnungsflächen der beiden schalenförmigen Leitmittel (4, 5) und der Rohrdurchmesser der Zuleitung (2) so aufeinander abgestimmt sind, dass in Betrieb das zulaufende Wasser mit einer überwiegend axialen Geschwindigkeitskomponente in den Schichtenspeicher einströmt, die derart gering ist, dass die durch die Temperaturdifferenzen bedingten Dichtedifferenzen zwischen dem einlaufenden Wasser und dem umgebenden Wasser ausreichen, das das einströmende Wasser unmittelbar in die Ziel-Speicherschicht zu lenken.

9. Schichtenspeicher nach Anspruch 8, **wobei** die axialen Geschwindigkeitskomponente unter 0,5 m/s, bevorzugt unter 0,05 m/s beträgt.

10. Schichtenspeicher nach einem der vorhergehenden Ansprüche, **wobei** das Mittel zum Einlagern am Randbereich der Behälterwand (1) angeordnet ist.

11. Schichtenspeicher nach Anspruch 10, **wobei** das erste schalenförmige Leitmittel (4) und/oder das zweite schalenförmige Leitmittel (5) einen Teil der Behälterwand (5) umfassen.

12. Schichtenspeicher nach einem der vorhergehenden Ansprüche, **wobei** das Mittel zum Einlagern so mit einem Auslauf (3) zusammenwirkt, dass die Mündung des Auslaufs innerhalb oder in der Nähe des ersten schalenförmigen Leitmittels (4) angeordnet ist.

13. Schichtenspeicher nach einem der vorhergehenden Ansprüche, **wobei** das Mittel zum Einlagern weitere Zuleitungen (2) umfasst, die mit weiteren zweiten schalenförmigen Leitmitteln (5) zusammenwirken, wobei die weiteren zweiten schalenförmige Leitmittel (5) die Merkmale des zweiten schalenförmigen Leitmittels (5) einer der vorhergehenden Ansprüche aufweist.

## Claims

1. A stratified storage comprising at least a separate means for storing water, wherein the means for storing comprises a supply line (2), a first cup-shaped guide unit (4) and a second cup-shaped guide unit (5), the second cup-shaped guide unit being smaller than the first cup-shaped guide unit (1), wherein the cup-shaped guide units (4, 5) are arranged such that a concave side of the second cup-shaped guide unit (5) is aligned in the direction of a concave side of the first cup-shaped guide unit (4), such that during operation the inflowing water is diverted from the second cup-shaped guide unit (5) and distributed to a larger cross section in order to be subsequently diverted from the first cup-shaped guide unit (4) and distributed to a larger cross section, **characterized in that** the cup-shaped guide units (4, 5) and the supply line (2) are arranged with respect to each other such that an opening of the supply line (2) opens inside the second cup-shaped guide unit (5) and the first cup-shaped guide unit (4) and/or the second cup-shaped guide unit (5) is perforated in an edge region (7, 9) and/or the second cup-shaped guide unit (5) is perforated in a bottom area (8) and/or at an edge of the bottom.

2. The stratified storage according to claim 1, **wherein** the second cup-shaped guide unit (5) is partially arranged inside the first cup-shaped guide unit (4).

3. The stratified storage according to claim 1, **wherein** the second cup-shaped guide unit (5) is arranged inside the first cup-shaped guide unit (4).

4. The stratified storage according to any of claims 1 to 3, **wherein** the first cup-shaped guide unit (4) and/or the second cup-shaped guide unit (5) are cuboid-shaped or at least partially cuboid-shaped.

5. The stratified storage according to any of the preceding claims, **wherein** an opening surface of the first cup-shaped guide unit (4) and/or of the second cup-shaped guide unit (5) is aligned horizontally.

6. The stratified storage according to any of the preceding claims, **wherein** the ratio of the opening surface area of the second cup-shaped guide unit (5) to that of the first cup-shaped guide unit (4) is less than 20%, and preferably less than 10%.

7. The stratified storage according to any of the preceding claims, **wherein** the ratio of the height to width of the first (4) and/or second cup-shaped guide unit (5) is greater than 20%, and preferably greater than 50%.

8. The stratified storage according to any of the preceding claims, **wherein** the opening surfaces of the two cup-shaped guide units (4, 5) and a tube diameter of the supply pipe (2) are arranged such that during operation the inflowing water flows into the stratified storage with a predominantly axial velocity component so low such that the differences in density of the inflowing water and the surrounding water caused by the differences in temperature suffice to divert the inflowing water immediately into a target storage layer.

9. The stratified storage according to claim 8, **wherein** the axial velocity component is below 0.5 m/s and preferably below 0.05 m/s.

10. The stratified storage according to any of the preceding claims, **wherein** the means for storing is disposed at an edge region of the container wall (1).

11. The stratified storage according to claim 10, **wherein** the first cup-shaped guide unit (4) and/or the second cup-shaped guide unit (5) enclose part of the container wall (5).

12. The stratified storage according to any of the preceding claims, **wherein** the means for storing interact with an outlet (3) such that an opening of the outlet is disposed inside or near the first cup-shaped guide unit (4).

13. The stratified storage according to any of the preceding claims, **wherein** the means for storing comprise further supply lines (2) interacting with further second cup-shaped guide units (5), the further second cup-shaped guide units (5) having the features of the second cup-shaped guide units (5) according to any of the preceding claims.

## Revendications

1. Réservoir stratifié comprenant au moins un moyen séparé pour stocker de l'eau, dans lequel le moyen de stockage comprend un conduit d'alimentation (2), un premier moyen de guidage en forme de coque (4) et un second moyen de guidage en forme de coque (5), qui est plus petit que le premier élément de guidage en forme de coque (1), dans lequel les moyens de guidage en forme de coque (4, 5) sont agencés l'un par rapport à l'autre de sorte que le côté concave du second moyen de guidage en forme de coque (5) soit orienté dans la direction du côté concave du premier moyen de guidage en forme de coque (4) afin que, en service, l'eau entrante dévie du second moyen de guidage en forme de coque (5) et se répartisse sur une plus grande section transversale pour dévier ensuite à nouveau du premier moyen de guidage en forme de coque (4) et se répartir sur une plus grande section transversale, **caractérisé en ce que** les moyens de guidage en forme de coque (4, 5) et le conduit d'alimentation (2) sont agencés l'un par rapport à l'autre de sorte que l'ouverture du conduit d'alimentation (2) débouche dans le second moyen de guidage en forme de coque (5) et le premier moyen de guidage en forme de coque (4) et/ou le second moyen de guidage en forme de coque (5) sont perforés dans la zone de bord (7, 9) et/ou le second moyen de guidage en forme de coque (5) est perforé dans la zone du fond (8) et/ou sur le bord du fond.

2. Réservoir stratifié selon la revendication 1, dans lequel le second moyen de guidage en forme de coque (5) est agencé en partie à l'intérieur du premier moyen de guidage en forme de coque (4).

3. Réservoir stratifié selon la revendication 1, dans lequel le second moyen de guidage en forme de coque (5) est agencé à l'intérieur du premier moyen de guidage en forme de coque (4).

4. Réservoir stratifié selon l'une quelconque des revendications 1 à 3, dans lequel le premier moyen de guidage en forme de coque (4) et/ou le second moyen de guidage en forme de coque (5) sont réalisés en parallélépipède ou au moins en partie en parallélépipède.

5. Réservoir stratifié selon l'une quelconque des revendications précédentes, dans lequel la surface d'ouverture du premier moyen de guidage en forme de coque (4) et/ou du second moyen de guidage en forme de coque (5) est orientée horizontalement.

6. Réservoir stratifié selon l'une quelconque des revendications précédentes, dans lequel le rapport des surfaces d'ouverture du second moyen de guidage en forme de coque (5) et du premier moyen de guidage en forme de coque (4) est inférieur à 20 %, de préférence inférieur à 10 %.

7. Réservoir stratifié selon l'une quelconque des revendications précédentes, dans lequel le rapport entre la hauteur et la largeur du premier (4) et/ou du second moyen de guidage en forme de coque (5) est supérieur à 20 %, de préférence supérieur à 50 %.

8. Réservoir stratifié selon l'une quelconque des revendications précédentes, dans lequel les surfaces d'ouverture des deux moyens de guidage en forme de coque (4, 5) et le diamètre du conduit d'alimentation (2) sont réglés l'un sur l'autre de sorte que, en service, l'eau entrante pénètre avec une composante de vitesse principalement axiale dans le réservoir stratifié, laquelle composante est suffisamment petite pour que les différences de densité conditionnées par les différences de température entre l'eau entrante et l'eau environnante suffisent pour dévier l'eau entrante directement dans la couche de réservoir cible.

9. Réservoir stratifié selon la revendication 8, dans lequel la composante de vitesse axiale se situe en dessous de 0,5 m/s, de préférence en dessous de 0,05 m/s.

10. Réservoir stratifié selon l'une quelconque des revendications précédentes, dans lequel le moyen de stockage est agencé dans la zone de bord de la paroi du récipient (1).

11. Réservoir stratifié selon la revendication 10, dans lequel le premier moyen de guidage en forme de coque (4) et/ou le second moyen de guidage en forme de coque (5) comprennent une partie de la paroi du récipient (5).

12. Réservoir stratifié selon l'une quelconque des revendications précédentes, dans lequel le moyen de stockage coopère avec une décharge (3) de sorte que l'embouchure de la décharge soit agencée à l'intérieur ou à proximité du premier moyen de guidage en forme de coque (4).

13. Réservoir stratifié selon l'une quelconque des revendications précédentes, dans lequel le moyen de stockage comprend d'autres conduits d'alimentation (2) qui coopèrent avec d'autres seconds moyens de guidage en forme de coque (5), dans lequel les autres seconds moyens de guidage en forme de coque (5) présentent les caractéristiques du second moyen de guidage en forme de coque (5) de l'une des revendications précédentes.
